# EUROPÄISCHE PATENTSCHRIFT

(11) **EP 1 400 018 B1**
(45) Veröffentlichungstag und Bekanntmachung des Hinweises auf die Patenterteilung: **24.11.2004**
(21) Anmeldenummer: 02738012.0
(22) Anmeldetag: 30.04.2002
(51) Int. Cl.: H03K 3/84, H04J 13/00, H04B 1/69

(54) **SIGNALGENERATOR FÜR EIN DSSS- ODER CDMA-SIGNAL**
SIGNAL GENERATOR FOR A DSSS OR CDMA SIGNAL
GENERATEUR DE SIGNAL POUR SIGNAL DSSS OU AMCR

(30) Priorität: 26.06.2001 DE 10130686
(43) Veröffentlichungstag der Anmeldung: 24.03.2004
(73) Patentinhaber: Rohde & Schwarz GmbH & Co. KG, 81671 München (DE)
(72) Erfinder: BRAUNSTORFINGER, Thomas, 80796 München (DE); KUFER, Wolfgang, 84453 Mühldorf (DE)
(74) Vertreter: Körfer, Thomas, Dipl.-Phys.
(86) Internationale Anmeldenummer: PCT/EP2002/004759
(87) Internationale Veröffentlichungsnummer: WO 2003/003579

(56) Entgegenhaltungen:
- DE-A- 3 129 911
- ALSOLAIM A ET AL: "Architecture and application of a dynamically reconfigurable hardware array for future mobile communication systems" FIELD-PROGRAMMABLE CUSTOM COMPUTING MACHINES, 2000 IEEE SYMPOSIUM ON NAPA VALLEY, CA, USA 17-19 APRIL 2000, LOS ALAMITOS, CA, USA,IEEE COMPUT. SOC, US, 17. April 2000 (2000-04-17), Seiten 205-214, XP010531939 ISBN: 0-7695-0871-5

## Beschreibung

Die Erfindung betrifft einen Signalgenerator für ein DSSS-Signal und/oder ein CDMA-Signal. Im Sinne dieser Patentanmeldung wird unter einem Signalgenerator eine Signalquelle jeglicher Art, beispielsweise auch Betriebsgeräte (Basisstationen, Mobilstationen), Meßgeräte usw. verstanden.

Das DSSS (Direct Sequence Spread Spectrum)-Verfahren erhöht die Bandbreite eines Signals, indem mit den Nutzdaten eine hochratige Spreizfolge moduliert wird. Durch die höhere Bandbreite des Signals bei konstanter Energie des Sendesignals wird das Signal unempfindlicher gegen frequenzselektive Störungen, beispielsweise variablem Schwund (Fading).

Bei dem CDMA(Code Division Multiple Access)-Verfahren werden viele Nutzdatenströme gleichzeitig auf einer Frequenz übertragen, wobei jeder einzelne Nutzdatenstrom mit dem DSSS-Verfahren moduliert wird und bei der Modulation verwendete Spreizsequenzen so gewählt werden, daß sie eine möglichst geringe Kreuzkorrelation aufweisen, d. h. orthogonal sind. Um mehrere Sendestationen unterscheiden zu können, besteht die Spreizsequenz bei CDMA-Systemen meist aus einem orthogonalen Code (z. B. Walshcode) und einer senderabhängigen Pseudo-Zufallsfolge, dem sogenannten Scrambling-Code. Mit einem CDMA-Verfahren arbeiten einige Standards für die zweite Generation Mobilfunk (beispielsweise IS 95) und die meisten Standards für die dritte Generation Mobilfunk, beispielsweise IS2000, 3GPP FDD, 3GPP TDD und TD/SCDMA.

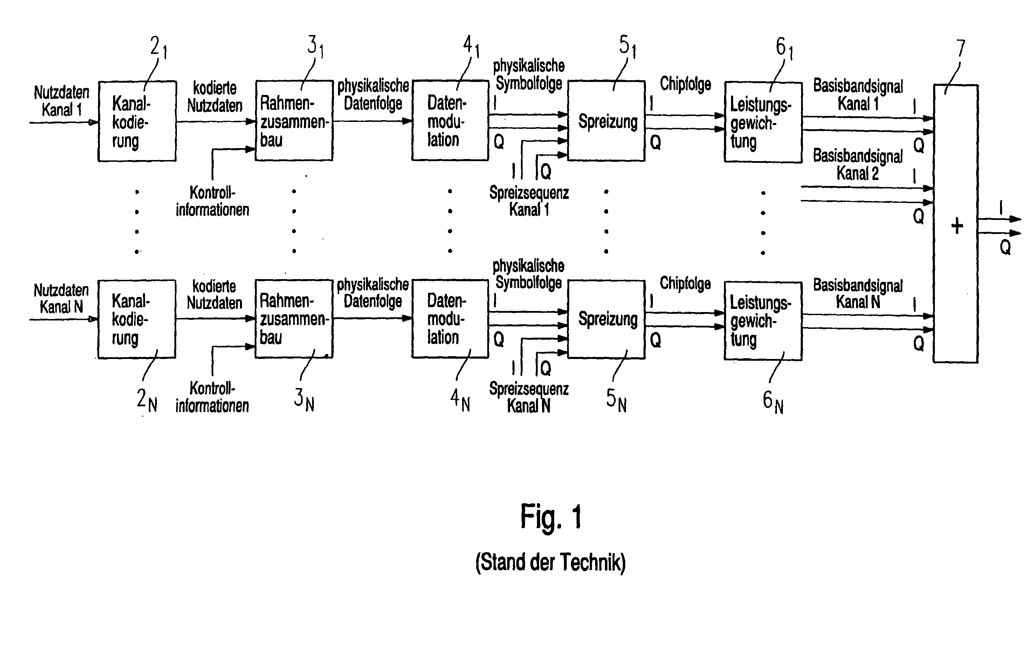

Zum besseren Verständnis der Erfindung wird nachfolgend unter Bezugnahme auf Fig. 1 ein Prinzipschaltbild zur Erzeugung eines aus N-Kanälen bestehenden CDMA-Signals geschrieben. Ähnliche Strukturen sind beispielsweise beschrieben in: Tero Ojanperä und Ramjee Prasad "Wide Band CDMA for Third Generation Mobile Communications", Artec House, 1998, Kapitel 2.4.1 "Downlink Channel Structure" und 2.4.2 "Uplink Channel Structure", Seiten 51 - 58.

Das mit dem in Fig. 1 dargestellten Prinzipschaltbild erzeugte Gesamtsignal besteht aus aufaddierten Beiträgen der N Kanäle. In jedem der N Kanäle wird ein Teilsignal durch die nachfolgend beschriebenen Verarbeitungsschritte erzeugt. Die Nutzdaten (z. B. digitalisierte und codierte Sprache oder Signalisierungsinformationen) werden einer Kanalcodierung 2₁, 2_{N} unterzogen, die typischerweise aus Prüfsummenbildung, Faltungscodierung und Interleaving (Verschachtelung) besteht. Anschließend werden aus den so codierten Daten und physikalischen Kontrollinformationen (z. B. Pilotsignale, Trainingssequenzen oder Steuerbits für eine Leistungssteuerung) die Rahmen zusammengebaut (3₁, 3_{N}) und es entsteht die physikalische Datenfolge. In Fig. 1 nicht dargestellt ist die Erzeugung von Steuerbits, die z. B. zum Austasten bestimmter Anteile im Rahmen und zur Leistungserhöhung bestimmter Rahmenteile dienen können. Die physikalische Datenfolge wird im nächsten Schritt, der Datenmodulation 4₁, 4_{N}, in die I/Q-Ebene abgebildet, wobei üblicherweise BPSK (Binary Phase Shift Keying) oder QPSK (Quaternary Phase Shift Keying)-Modulationen eingesetzt werden. Die komplexen Symbole werden jetzt mit einer in der Regel komplexwertigen Spreizsequenz gespreizt, wobei die Spreizung meist als komplexe Multiplikation mit dem Symbolstrom ausgeführt wird. Mit der Spreizung 5₁, 5_{N} steigt die Bandbreite des Signals um den Spreizfaktor beispielsweise von 30 kHz auf 3840 kHz an. Die so entstandene komplexwertige Chipfolge wird mit der Kanalleistung gewichtet (6₁, 6_{N}) und mit den auf gleiche Weise erzeugten Beiträgen der anderen Kanäle aufsummiert (7). Das I/Q Summensignal wird dann (in Fig. 1 nicht mehr dargestellt) gefiltert und über einen I/Q-Modulator in die Zwischenfrequenzebene bzw. Hochfrequenzebene umgesetzt.

Die vorliegende Erfindung beschäftigt sich mit der Realisierung des Rahmenzusammenbaus 3₁, 3_{N}, der Datenmodulation 4₁, 4_{N}, der Spreizung 5₁, 5_{N}, der Leistungsgewichtung 6₁, 6_{N} und der Summation 7.

Üblicherweise werden DSSS- und CDMA-Signale mit einem sehr hohen Hardware-Aufwand unter anderem durch Verwendung von Schieberegistern erzeugt. Dies ist beispielsweise aus der US 5,193,094 bekannt. Dabei muß für jeden CDMA-Standard eine spezielle Hardware vorgesehen werden, da sich die jeweiligen Standards im zahlreichen Punkten unterscheiden. Beispielsweise ist der Rahmenzusammenbau bei den einzelnen Standards äußerst unterschiedlich, da unterschiedliche Pilotsignale und unterschiedliche Trainingssequenzen verwendet werden. Einer der wichtigsten Weitband-CDMA-Standards "3GPP FDD Downlink" umfaßt alleine 50 verschiedene Rahmenformate für nur einen Kanaltyp. Bei ca. 10 Kanaltypen pro Standard und 10 CDMA-Standards kann diese Vielfalt nicht mit einer einzigen Hardware abgedeckt werden. Neben den üblichen Modulationsarten BPSK und QPSK werden auch höherwertige Modulationen eingesetzt. Auch bei BPSK und QPSK sind zahlreiche Varianten bekannt. Die Spreizung ist bei jedem Standard unterschiedlich ausgeführt. Dies betrifft insbesondere die Berechnung des orthogonalen Anteils der Spreizsequenz, die Berechnung des Scramling-Code-Anteils der Spreizsequenz, die Berechnung der Spreizsequenz aus den beiden vorgenannten Anteilen sowie die Berechnung der Chipfolge aus der physikalischen Symbolfolge und der Spreizsequenz.

Bei Betriebsgeräten ist der Aufwand der bislang üblichen Hardwarerealisierung noch einigermaßen überschaubar, da Betriebsgeräte nur den Standard derjenigen Geräte beherrschen müssen, für welchen sie ausgelegt sind. Signalgeneratoren für Meßzwecke, die für die Entwicklung und das Testen von Basisstationen und Mobilstationen von Mobilfunksystemen, die nach unterschiedlichsten Standards arbeiten, geeignet sein müssen, besteht der Hardware-Aufwand dabei aus einem eigenen Chipsatz für jeden Standard oder aus FPGAs, die beim Wechsel des Standards umkonfiguriert werden. In dem Entwicklungsaufwand für die Gesamtheit der FPGA-Konfigurationen geht die Anzahl der Standards nahezu linear ein, da die Teilfunktionen jedesmal neu realisiert werden müssen.

Der Erfindung liegt daher die Aufgabe zugrunde, einen Signalgenerator für ein DSSS- und/oder CDMA-Signal zu schaffen, der mit geringem Hardwareaufwand auskommt, wobei mit einer einzigen Schaltung Signale eines üblichen DSSSund/oder CDMA-Standards erzeugt werden können.

Die Aufgabe wird durch die Merkmale des Anspruchs 1 gelöst.

Der Erfindung liegt das Konzept zugrunde, einen digitalen Signalprozessor mit einer universellen Hardware-Schaltung zu vereinigen, mit der DSSS- und/oder CDMA-Signale besonders aufwandsarm erzeugt werden können. Die Spreizsequenz wird dabei von dem digitalen Signalprozessor in einer Initialisierungsphase vorberechnet und in einem Spreizsequenzspeicher abgelegt. Ein solches Konzept ist in DE 3 129 911 offenbart. In der Betriebsphase der Erfindung werden von dem digitalen Signalprozessor die Datensymbole an einen Abbildungsspeicher übergeben, wobei der Abbildungsspeicher eine Abbildungstabelle enthält, mit welcher die Bits der aktuellen Datensymbole und ein sequentiell aus dem Spreizsequenzspeicher ausgelesenes Bit der Spreizsequenz in jeweils einen Ausgangswert abgebildet werden.

Die Unteransprüche betreffen vorteilhafte Weiterbildungen der Erfindung.

Die Verarbeitung kann für die I(Inphase)-Komponente und die Q(Quadraturphase)-Komponente getrennt vorgenommen werden. Der Abbildungsspeicher kann einen kanalspezifischen Verstärkungsfaktor enthalten.

Zwischen dem Signalprozessor und dem Abbildungsspeicher ist vorzugsweise ein Pufferspeicher (z. B. FIFO) vorgesehen, der bei Unterschreiten eines Grenzfüllstandes eine Nachfüllanforderung (Interrupt) an den digitalen Signalprozessor aussendet.

Wenn mehrere parallele CDMA-Kanäle mit gleicher Datenfolge und gleicher Leistung erzeugt werden sollen, kann ein gemeinsamer Abbildungsspeicher für diese Kanäle verwendet werden. Dabei kann zwischen dem Pufferspeicher und dem Abbildungsspeicher ein Adreßregister vorgesehen sein, das eine Umschaltung der dem Abbildungsspeicher zugführten Adresse in Abhängigkeit von dem aktuellen Kanal ermöglicht.

Vorzugsweise kann der Abbildungsspeicher parallel zu dem Lesen gleichzeitig beschrieben werden, um eine Umprogrammierung der Abbildungstabelle bei laufender Ausgabe zu ermöglichen.

Mehrere Ausführungsbeispiele der Erfindung werden nachfolgend unter Bezugnahme auf die Zeichnung näher beschrieben. In der Zeichnung zeigen:
- Fig. 1: ein Prinzipschaltbild der einzelnen Verarbeitungsschritte bei der Erzeugung eines CDMA-Signals;
- Fig. 2: ein Blockschaltbild des erfindungsgemäßen Signalgenerators;
- Fig. 3: einen modifizierten Ausschnitt aus Fig. 2;
- Fig. 4: einen weiteren modifizierten Ausschnitt aus Fig. 2; und
- Fig. 5: ein weiteres Ausführungsbeispiel des erfindungsgemäßen Signalgenerators

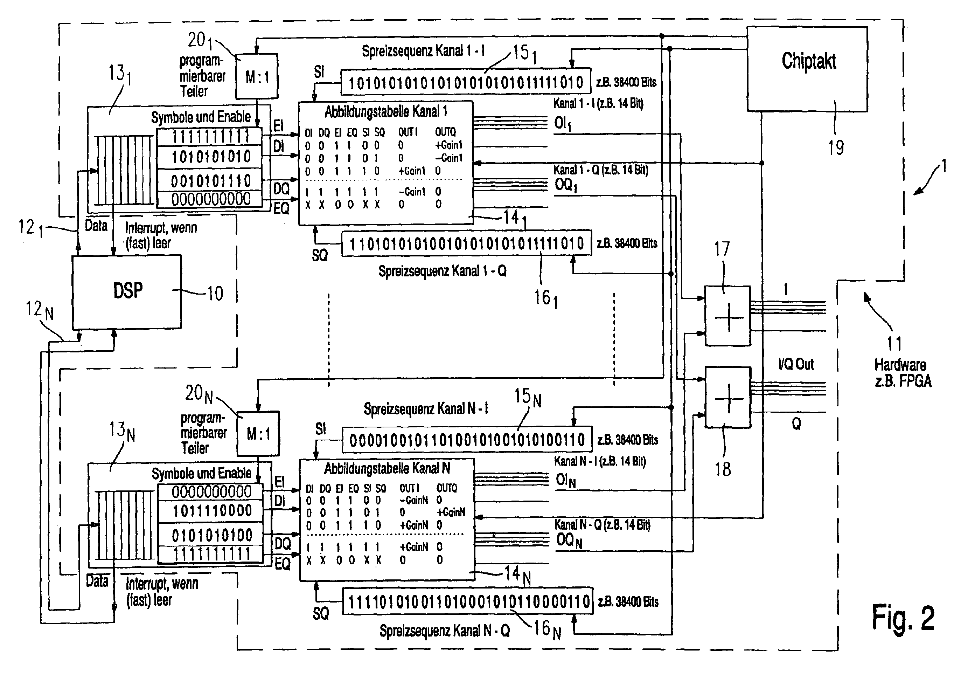

Fig. 2 zeigt ein Blockschaltbild eines erfindungsgemäßen Signalgenerators 1. Der Signalgenerator 1 gliedert sich in einen digitalen Signalprozessor 10 und eine Hardware-Schaltung 11, die beispielsweise als FPGA realisiert werden kann. Bei dem digitalen Signalprozessor 10 handelt es sich entweder um einen speziellen Prozessor für die Verarbeitung digitaler Signale oder eine universelle CPU.

Es sind insgesamt N Kanäle vorhanden, wobei nachfolgend zunächst der in Fig. 2 oben dargestellte 1. Kanal beschrieben wird.

Der digitale Signalprozessor 10 steht über eine Leitung 12₁ mit einem Pufferspeicher 13₁ in Verbindung, dessen Dateninhalt für die ersten zehn Datenworte beispielhaft wiedergegeben ist. Jedes Datenwort besteht aus insgesamt vier Bits, jeweils einem Datensymbol-Bit DI und DQ für die I-Komponente und die Q-Komponente. Ferner ist ein Enable-Bit (Steuer-Bit) EI bzw. EQ für die I-Komponente bzw. Q-Komponente vorgesehen. Der Pufferspeicher 13₁ steht über die vorstehend beschriebenen Bitleitungen für EI, DI, DQ, EQ mit einem Abbildungsspeicher 14₁ in Verbindung. Ferner ist ein erster Spreizsequenz-Speicher 15₁ für die I-Komponente und ein zweiter Spreizsequenzspeicher 16₁ für die Q-Komponente vorhanden. Die Spreizsequenzspeicher 15₁ und 16₁ enthalten eine pseudozufällige, zyklische Spreizsequenz, die im dargestellten Ausführungsbeispiel aus 38400 Bits besteht. Die Spreizsequenzspeicher 15₁ und 16₁ werden bitweise ausgelesen und können als Ringspeicher adressiert werden, d. h. die Sequenz wiederholt sich im Beispiel alle 38400 Bits. Das gerade ausgelesene Bit SI der Spreizsequenz für die I-Komponente und SQ der Spreizsequenz für die Q-Komponente wird ebenfalls dem Abbildungsspeicher 14₁ zugeführt.

Der Abbildungsspeicher 14₁ enthält eine Abbildungstabelle, mit welcher die Bits der aktuellen Datensymbole DI, DQ, die Enable-Bits EI, EQ sowie die aktuellen Bits der Spreizsequenz SI, SQ in einen I-Ausgangswert OI₁ und einen Q-Ausgangswert OQ₁ abgebildet werden. Die Ausgangswerte OI₁ und OQ₁ stellen Spannungswerte in der I/Q-Ebene dar, die im dargestellten Beispiel mit 14 Bit aufgelöst werden. Die Zuordnung erfolgt in Art einer Look-Up-Tabelle, wobei dem 1. Kanal ein Verstärkungsfaktor Gain1 zugewiesen ist und dieser Verstärkungsfaktor Gain1 in der Abbildungstabelle bereits enthalten ist.

Wenn der Pufferspeicher 13₁ nur noch bis zu einem gefüllten Grenzfüllstand gefüllt ist, also fast leer ist, so erzeugt dieser eine Nachfüllanforderung in Form eines Interrupt an den digitalen Signalprozessor 10. Dadurch wird die Verarbeitungspriorität des digitalen Signalprozessors 10 so gesteuert, daß dieser vorrangig den Pufferspeicher 13₁ wieder befüllt.

Bei dem in Fig. 2 dargestellten Ausführungsbeispiel ist für jeden der insgesamt N Kanäle die vorstehend für den 1. Kanal beschriebene Struktur vorhanden. In Fig. 2 ist noch der N. Kanal dargestellt, wobei bei den Bezugszeichen der Index N verwendet ist. Die Verstärkung des N. Kanals beträgt GainN. Der 2. bis N-1. Kanal sind in gleicher Weise ausgestaltet, aber in Fig. 2 nicht dargestellt.

An einem ersten Addierer 17 werden alle Ausgangswerte OI₁ bis OI_{N} jeweils der I-Komponente aller Kanäle zu einem Gesamt-Ausgangswert I addiert. Entsprechend werden an einem zweiten Addierer 18 alle Ausgangswerte OQ₁ bis OQ_{N} des aller Kanäle zu einem Gesamt-Ausgangswert Q addiert.

An einem zentralen Chip-Taktgenerator 19 wird ein Chiptakt erzeugt, der den Abbildungsspeicher 14₁, 14_{N} und den Spreizsequenz-Speicher 15₁, 16₁, 15_{N}, 16_{N} direkt zugeführt wird. Den Pufferspeichern 13₁, 13_{N} wird der Chiptakt reduziert um dem Spreizfaktor M zugeführt. Der reduzierte Chiptakt wird jeweils in einem programmierbaren Teiler 20₁, 20_{N}, der auch für alle Kanäle gemeinsam vorhanden sein kann, erzeugt.

Gegenüber der Vorgehensweise gemäß dem Stand der Technik ergeben sich folgende Unterschiede:
Der Rahmen wird durch die DSP-Software zusammengebaut und an die Hardware über die Pufferspeicher 13₁, 13_{N} übergeben.

Parallel zur physikalischen Datenfolge DI, DQ berechnet der digitale Signalprozessor auch noch die Enable-Bits EI, EQ, die z. B. der Austastung bestimmter Rahmenteile dienen. Somit können die zahlreichen Varianten des Rahmenzusammenbaus wesentlich schneller implementiert werden. Gleichzeitig reduziert sich der Gatteraufwand der Schaltung.

Die Spreizsequenz wird nicht durch Generatoren in der Hardware berechnet, sondern von dem digitalen Signalprozessor 10 vorberechnet und in einem der Hardware 11 zugänglichen Spreizsequenzspeicher 15₁, 16₁, 15_{N}, 16_{N} abgelegt. Dies muß in einer Inizialisierungsphase nur einmal vor der Erzeugung des Signals erfolgen, da die Spreizsequenzen periodisch sind und eine komplette Periode nur relativ wenig Speicher beansprucht.

Die Spreizung selbst wird gleichzeitig mit der Datenmodulation und der Leistungsgewichtung in einem Table-Look-Up-Verfahren realisiert, wobei die Hardware 11 aus den physikalischen Datenbits EI, DI, DQ und EQ und den aktuellen Bits der Spreizsequenz SI und SQ eine Adresse berechnet, unter der die Spannungswerte für die I-Komponente und die Q-Komponente abgelegt sind. Der digitale Signalprozessor 10 berechnet die Abbildungstabelle während einer Initialisierungsphase und legt diese in dem von der Hardware 11 zugänglichen Abbildungsspeicher 14₁, 14_{N} ab.

Die Größe der Abbildungstabelle in dem Abbildungsspeicher 14₁, 14_{N} berechnet sich aus der Anzahl ND der Datenbits DI, DQ, der Anzahl NS der Enable-Bits EI, EQ, der konstanten Anzahl 2 der Spreizbits SI, SQ und der Auflösung A_{OUT}. Die der Ausgangswerte OI₁, OQ₁, OI_{N}, OQ_{N}. Die Anzahl der Zeile der Tabelle ist somit 2^{ND+NS+2}. Pro Zeile müssen 2 · A_{OUT} Bits vorgesehen werden.

In einer Initialisierungsphase berechnet der digitale Signalprozessor 10 die Spreizsequenzen und Abbildungstabellen und legt diese in den jeweiligen Speicher 14₁, 14_{N}, 15₁, 15_{N}, 16₁, 16_{N} ab. Ferner programmiert der digitale Signalprozessor 10 den zentralen Chiptaktgenerator 19 und die Spreizfaktoren M der programmierbaren Teiler 20₁, 20_{N}.

In einer Betriebsphase berechnet der digitale Signalprozessor 10 die physikalischen Datenfolgen DI, DQ und die zugehörigen Enable-Bits EI, EQ und schreibt diese in die Pufferspeicher 13₁, 13_{N}, die beispielsweise als FIFO (First In First Out) ausgebildet sein können. Die Rechenleistung des digitalen Signalprozessors 10 ist so zu wählen, daß alle Pufferspeicher 13₁, 13_{N} nachgeladen werden können, bevor diese leerlaufen. Aus den aktuell ältersten Daten- und Enable-Bits DI, DQ, EI EQ des Pufferspeichers 13₁, 13_{N} und den aktuellen ausgelesenen Bits SI, SQ der Spreizsequenz wird ein Adreß-Wort gebildet, das die Abbildungstabelle in dem Abbildungsspeicher 14₁, 14_{N} adressiert. Der Abbildungsspeicher 14₁, 14_{N} wird an der so berechneten Adresse ausgelesen, wodurch der I-Ausgangswert OI₁, OI_{N} und der Q-Ausgangswert OQ₁, OQ_{N} erhalten wird. Die Ausgangswerte OI₁-OI_{N}, OQ₁-OQ_{N} sämtlicher Kanäle werden an den Addierern 17, 18 aufaddiert und am Ausgang des Signalgenerators 1 bereitgestellt.

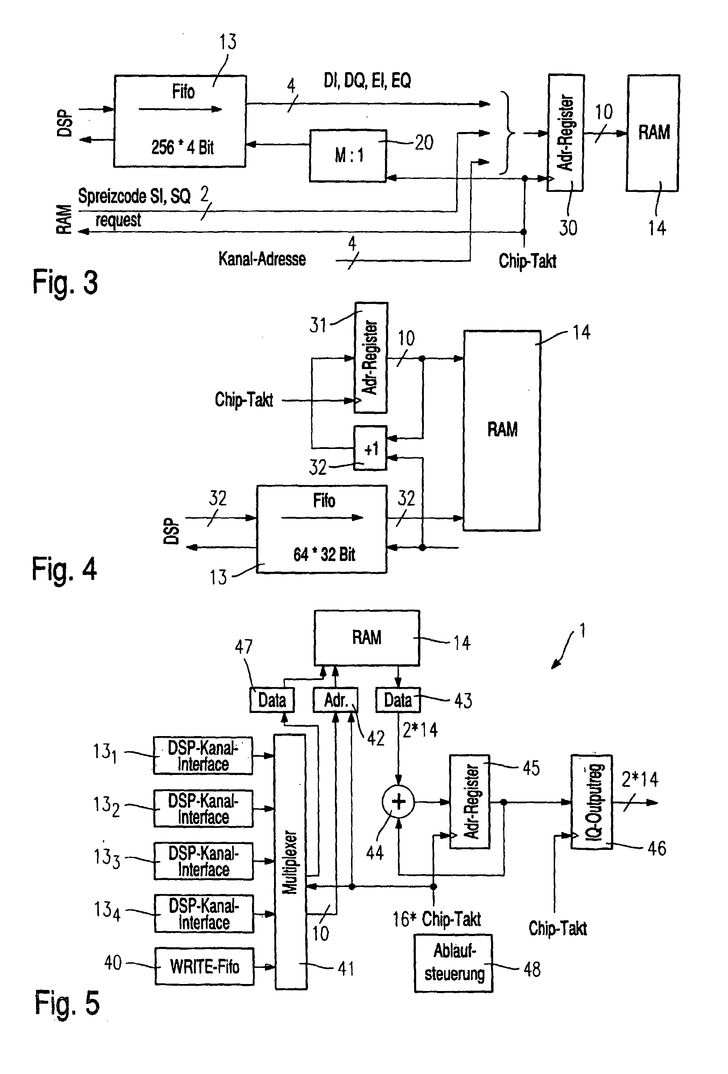

Es gibt Anwendungen, bei welchen mehrere parallele CDMA-Kanäle mit den gleichen Datenmodulationen und Leistungen erzeugt werden müssen. Hierbei kann die gleiche Abbildungstabelle bzw. der gleiche Abbildungsspeicher für mehrere Kanäle verwendet werden, wenn die in Fig. 2 dargestellte Schaltung wie in Fig. 3 dargestellt modifiziert wird. Zwischen dem Pufferspeicher 13 und dem Abbildungsspeicher 14₁ wird ein erstes Adreßregister 30 eingefügt. Dabei wird die Adresse für den Abbildungsspeicher 14 aus drei Anteilen bestimmt: der physikalischen Symbolfolge DI, DQ ggf. mit den Enable-Bits EI, EQ, den aktuellen Bits SI, SQ der Spreizsequenz und einer quasistatischen Kanal-Adresse, die beispielsweise aus 4 Bits besteht. Die Kanaladresse geht als die höchstwertigen Bits in das Adreßwort ein. Bei allen Kanälen mit derselben Abbildungtabelle wird das Adreßregister 30 in der Initialisierungsphase auf identische Adressen programmiert.

Für bestimmte Anwendungen ist es wünschenswert, die Abbildungstabelle bereits während der Ausgabe umzuprogrammieren. Dies ist z. B. dann nötig, wenn die Sendeleistung eines Kanals dynamisch geändert werden soll.

Fig. 4 zeigt eine entsprechende Modifizierung des in Fig. 2 dargestellten Blockschaltbilds. Die Adresse des zu beschreibenden Speicherbereichs des Abbildungsspeichers 14 wird in ein zweites Adreßregister 31 geschrieben. Danach werden über den Pufferspeicher 13 die I/Q-Wertepaare in die Abbildungstabelle des Abbildungsspeichers 14 geschrieben, wobei die Adresse mit jedem geschriebenen Wertepaar in einem Inkrementierer 32 automatisch inkrementiert wird. Alternativ ist natürlich auch eine automatische Dekrementierung möglich.

Fig. 5 zeigt ein anderes Ausführungsbeispiels des erfindungsgemäßen Signalgenerators 1. Diese Architektur eignet sich besonders für eine Implementierung mit FPGAs oder ASICs. Da die Speicher und die programmierbare Logik eine wesentlich höhere Verarbeitungsgeschwindikeit zulassen, als sie für einen CDMA-Kanal benötigt wird (z. B. 100 MHz gegenüber 4 MHz) kann von einer effektiven Ablaufsteuerung das Auslesen der I/Q-Werte aus der Abbildungstabelle, das Aufaddieren der Kanalbeiträge zu dem Summensignal I/Q und das Beschreiben der Abbildungstabelle sequentiell effektiv gesteuert werden. So kann eine höhere Taktrate ausgenutzt und der Bedarf an Logikzellen reduziert werden.

Bei dem in Fig. 5 dargestellten Ausführungsbeispiel ist für jeden der beispielhaft vier Kanäle ein Pufferspeicher 13₁, 13₂, 13₃ bzw. 13₄ vorgesehen, der im Lesefall die Speicheradresse des für diesen Kanal aus dem gemeinsamen Abbildungsspeicher 14 zu lesenden Ausgangswert I/Q enthält. Ferner ist ein Schreib-Pufferspeicher 40 vorgesehen. Die Kanal-Pufferspeicher 13₁, 13₂, 13₃, 13₄ und der Schreib-Pufferspeicher 40 sind mit einem Multiplexer 41 verbunden, der die aus dem jeweiligen Pufferspeicher 13₁, 13₂, 13₃, 13₄, 40 ausgelesene Adresse einem Adreßregister 42 zuführt. Die aus dem Abbildungsspeicher 14 ausgelesenen I/Q-Ausgangswerte werden in einem ersten Datenregister 43 zwischengespeichert, welcher mit einem ersten Eingang eines Addierers 44 in Verbindung steht. Am Ausgang des Addierers 44 befindet sich ein Addierregister 45, dessen Ausgang mit dem anderen Eingang des Addierers 44 verbunden ist. In einem I/Q-Ausgangsregister 46 stehen die I/Q-Ausgangswerte nach der Addition der einzelnen Kanäle zur Verfügung. Die in den Abbildungsspeicher 14 einzuspeichernden Tabellendaten werden in einem zweiten Datenregister 47 gepuffert. Die Steuerung des nachfolgend zu beschreibenden Ablaufs übernimmt eine Ablaufsteuerung 48.

Die Funktionsweise der in Fig. 5 dargestellten Schaltung ist wie folgt: Für jeden Chiptakt wird zunächst das Addierregister 45 gelöscht. Dann wird über den Kanal-Pufferspeicher 13₁ und den Multiplexer 41 die Adresse des ersten Kanals in das Adreßregister 42 geladen, der zugehörige I/Q-Wert in das erste Datenregister 43 geschrieben und an dem Addierer 44 zu dem vorher gelöschten Inhalt des Addierregisters 45 addiert. Dann wird über den Kanal-Pufferspeicher 13₂ und den Multiplexer 41 die Adresse des zweiten Kanals in das Adreßregister 42 geschrieben, der zugehörige I/Q-Wert aus dem Abbildungsspeicher 14 ausgelesen, in das erste Datenregister 43 geschrieben mittels des Addierers 44 zu dem von dem Addierregister 45 beinhalteten I/Q-Wert des ersten Kanals addiert. Dann wird über den Pufferspeicher 13₃ und den Multiplexer 41 die Adresse des dritten Kanals in das Adreßregister 42 geladen, der zugehörige I/Q-Wert in das erste Datenregister 43 übertragen und mittels des Addierers 44 zu dem summierten Ausgangswert des ersten und zweiten Kanals addiert. Schließlich wird über dem Pufferspeicher 13₄ und dem Multiplexer 41 die Adresse des vierten Kanals in das Adreßregister 42 geladen, der zugehörige I/Q-Wert des Abbildungsspeichers 14 in das erste Datenregister 43 übertragen und mittels des Addierers 44 zu dem Summenwert des ersten, zweiten und dritten Kanals addiert. Dann wird der Wert des Addierregisters 45 ggf. nach einer Division durch die Anzahl der aktiven Kanäle in das I/Q-Ausgangsregister 46 übernommen.

Bis der I/Q-Wert des ersten Kanals des nächsten Chips aus dem Abbildungsspeicher 14 ausgelesen werden muß, verbleibt noch einige Zeit. Diese Zeit kann die Ablaufsteuerung 48 nutzen, indem im Bedarfsfall die Abbildungstabelle des Abbildungsspeichers 14 aktualisiert wird. Dazu wird zunächst aus dem Schreib-Pufferspeicher 40 die Startadresse für den zu überschreibenden Speicherbereich des Abbildungsspeichers 14 geladen. Nachfolgend können mehrere Datenworte durch den Multiplexer 41 vom Schreib-Pufferspeicher 40 übernommen werden, sukzessive dem zweiten Datenregister 47 zugeführt und in die Abbildungstabelle des Abbildungsspeichers 14 eingetragen werden. Die aktuelle Schreibadresse kann dann, wie in Fig. 4 dargestellt und wie in Fig. 5 aus Vereinfachungsgründen weggelassen, von Datenwort zu Datenwort inkrementiert oder dekrementiert werden.

Die Erfindung ist nicht auf die dargestellten Ausführungsbeispiele beschränkt. Anstatt eines einzigen digitalen Signalprozessors 10 können auch mehrere digitale Signalprozessoren 10 eingesetzt werden. Die nötige Rechenleistung der digitalen Signalprozessoren 10 hängt unter anderem von der Anzahl der CDMA-Kanäle, dem Spreizfaktor M der Kanäle und dem Aufwand für die Berechnung der Datenbits DI, DQ und Enablebits EI, EQ ab. Die Echtzeitbedingung für die digital Signalprozessoren 10 ist, daß alle Pufferspeicher 13₁, 13_{N} nachgeladen werden können, bevor diese leerlaufen. Ist diese Echtzeitbedingung von einem einzigen digitalen Signalprozessor 10 nicht zu erfüllen, so kann die Anzahl der eingesetzten digitalen Signalprozessoren 10 ohne Schwierigkeiten erweitert werden, da diese Aufgabe hochgradig parallel ist. Der Einsatz mehrerer digitaler Signalprozessoren 10 kann auch sinnvoll sein, wenn für einen bestimmten Standard mit einem einzigen digitalen Signalprozessor 10 die erforderliche Rechenleistung nicht zur Verfügung gestellt werden kann. Auch kann es ökonomisch günstiger sein, mehrere kostengünstigere digitale Signalprozessoren 10 anstatt eines einzigen relativ teuren digitalen Signalprozessors 10 mit hoher Rechenleistung einzusetzen, da der Preis eines digitalen Signalprozessors 10 überproportional mit seiner Rechenleistung ansteigt.

## Patentansprüche

1. Signalgenerator (1) für ein DSSS- und/oder ein CDMA-Signal mit
zumindest einem Spreizsequenzspeicher (15₁, 16₁; 15_{N}, 16_{N}) und zumindest einem digitalen Signalprozessor (10), der in einer Initialisierungsphase eine Spreizsequenz vorberechnet und in dem Spreizsequenzspeicher (15₁, 16₁; 15_{N}, 16_{N}) ablegt,
**dadurch gekennzeichnet,**
**daß** der digitale Signalprozessor (10) in einer Betriebsphase Datensymbole an zumindest einen Abbildungsspeicher (14₁; 14_{N}) ausgibt,
wobei jeder Abbildungsspeicher (14₁; 14_{N}) eine Abbildungstabelle enthält, mit welcher die Bits (DI, DQ) der aktuellen Datensymbole und zumindest ein sequentiell aus jedem Spreizsequenzspeicher (15₁, 16₁; 15_{N}, 16_{N}) ausgelesenes aktuelles Bit (SI, SQ) der Spreizsequenz in einen Ausgangswert (OI₁, OQ₁; OI_{N}, OQ_{N}) abgebildet werden.

2. Signalgenerator nach Anspruch 1,
**dadurch gekennzeichnet,**
**daß** mehrere Kanäle vorhanden sind und für jeden Kanal ein Abbildungsspeicher (14₁, 14_{N}) vorgesehen ist, wobei jeweils ein I(Inphase)-Ausgangswert (OI₁, OI_{N}) und ein Q(Quadraturphase)-Ausgangswert (OI_{N}, OQ_{N}) erzeugt wird, die an jeweils einem Addierer (17, 18) addiert werden.

3. Signalgenerator nach Anspruch 2,
**dadurch gekennzeichnet,**
**daß** für jeden Kanal ein I-Spreizsequenzspeicher (15₁, 15_{N}), der eine I-Spreizsequenz enthält, und ein Q-Spreizsequenzspeicher (16₁, 16_{N}), der eine Q-Spreizsequenz enthält, vorhanden sind.

4. Signalgenerator nach Anspruch 2 oder 3,
**dadurch gekennzeichnet,**
**daß** die Ausgangswerte (OI₁, OQ₁; OI_{N}, OQ_{N}) von einem in dem Abbildungsspeicher (14₁; 14_{N}) enthaltenen, kanalspezifischen Verstärkungsfaktor (Gain1; GainN) abhängig sind.

5. Signalgenerator nach einem der Ansprüche 1 bis 4,
**dadurch gekennzeichnet,**
**daß** der digitale Signalprozessor (10) an den Abbildungsspeicher (14₁; 14_{N}) neben den Bits (DI, DQ) der Datensymbole auch Steuerbits (Enablebits) (EI, EQ) ausgibt.

6. Signalgenerator nach einem der Ansprüche 1 bis 5,
**dadurch gekennzeichnet,**
**daß** zwischen dem digitalen Signalprozessor (10) und jedem Abbildungsspeicher (14₁; 14_{N}) ein Pufferspeicher (13₁; 13_{N}) angeordnet ist und
**daß** ein Chiptaktgenerator (19) vorgesehen ist, dessen Chiptakt den Spreizsequenzspeichern (15₁, 16₁; 15_{N}, 16_{N}) und den Abbildungsspeichern (14₁; 14_{N}) direkt und den Pufferspeichern (13₁; 13_{N}) über einen programmierbaren Teiler (20₁; 20_{N}), der einen Spreizfaktor (M) enthält, zugeführt wird.

7. Signalgenerator nach Anspruch 6,
**dadurch gekennzeichnet,**
**daß** jeder Pufferspeicher (13₁, 13_{N}) bei Unterschreiten eines Grenzfüllstandes eine Nachfüllanforderung (Interrupt) an den digitalen Signalprozessor (10) aussendet.

8. Signalgenerator nach Anspruch 6 oder 7,
**dadurch gekennzeichnet,**
**daß** mehrere Kanäle vorhanden sind, ein gemeinsamer Abbildungsspeicher (14) für mehrere Kanäle verwendet wird und zwischen jedem Pufferspeicher (13₁) und dem gemeinsamen Abbildungsspeicher (14) ein erstes Adreßregister (30) vorgesehen ist, das eine Umschaltung der dem gemeinsamen Abbildungsspeicher (14) zugeführten Adresse in Abhängigkeit von dem aktuellen Kanal ermöglicht.

9. Signalgenerator nach einem der Ansprüche 1 bis 8,
**dadurch gekennzeichnet,**
**daß** ein Beschreiben des Abbildungsspeichers (14) gleichzeitig zu dem Lesen des Abbildungsspeichers (14) möglich ist.

10. Signalgenerator nach Anspruch 9,
**dadurch gekennzeichnet,**
**daß** die Adresse eines aktuell zu beschreibenden Speicherbereichs des Abbildungsspeichers (14) in einem zweiten Adreßregister (31) gespeichert ist und nach jedem Schreibzyklus inkrementiert oder dekrementiert wird.

11. Signalgenerator nach Anspruch 9 oder 10,
**dadurch gekennzeichnet,**
**daß** mehrere Kanäle vorgesehen sind und für jeden Kanal ein Kanal-Pufferspeicher (13₁, 13₂, 13₃, 13₄) vorhanden ist, der die Speicheradresse des für diesen Kanal aus dem gemeinsamen Abbildungsspeicher (14) zu lesenden Ausgangswerts (I/Q) enthält,
**daß** mindestens ein Schreib-Pufferspeicher (40) vorhanden ist, der die Adresse und die Dateninhalte eines neu zu beschreibenden Bereichs des Abbildungsspeichers (14) enthält, und
**daß** ein Multiplexer (41) vorhanden ist, der die Kanal-Pufferspeicher (13₁, 13₂, 13₃, 13₄) und den Schreib-Pufferspeicher (40) alternierend mit dem Abbildungsspeicher (14) verbindet.

## Claims

1. Signal generator (1) for a DSSS and/or a CDMA signal comprising at least one spread sequence memory (15₁, 16₁; 15_{N}, 16_{N}) and at least one digital signal processor (10), which pre-calculates a spread sequence and, in an initialisation phase, stores this spread sequence in the spread sequence memory (15₁, 16₁; 15_{N}, 16_{N}),
**characterised in that,**
in an operating phase, the digital signal processor (10) outputs data symbols to at least one image memory (14₁; 14_{N}),
wherein each image memory (14₁; 14_{N}) contains an image table, with which the bits (DI, DQ) of the current data symbols and at least one current bit (SI, SQ) of the spread sequence read out sequentially from each spread sequence memory (15₁, 16₁; 15_{N}, 16_{N}) are imaged into an output value (OI₁, OQ₁; OI_{N}, OQ_{N}).

2. Signal generator according to claim 1,
**characterised in that**
several channels are present, and that an image memory (14₁, 14_{N}) is provided for each channel, wherein one I (In phase) output value (OI₁, OI_{N}) and one Q (Quadrature phase) output value (OI_{N}, OQ_{N}) respectively is generated, which are added at respectively one adder (17, 18).

3. Signal generator according to claim 2,
**characterised in that**
an I spread sequence memory (15₁, 15_{N}), which contains an I spread sequence, and a Q spread sequence memory (16₁, 16_{N}), which contains a Q spread sequence, are present for each channel.

4. Signal generator according to claim 2 or 3,
**characterised in that**
the output values (OI₁, OQ₁; OI_{N}, OQ_{N}) are dependent upon a channel-specific amplification factor (Gain 1; GainN) contained in the image memory (14₁, 14_{N}).

5. Signal generator according to any one of claims 1 to 4,
**characterised in that**,
the digital signal processor (10) also outputs control bits (enable bits) (EI, EQ) to the image memory (14₁; 14_{N}) in addition to the bits (DI, DQ) of the data symbols.

6. Signal generator according to any one of claims 1 to 5,
**characterised in that**
a buffer memory (13₁; 13_{N}) is disposed between the digital signal processor (10) and each image memory (14₁; 14_{N}), and
that a chip clock generator (19) is provided, of which the chip cycle is supplied to the spread sequence memories (15₁, 16₁; 15_{N}, 16_{N}) and to the image memories (14; 14) directly, and to the buffer memories (13₁; 13_{N}) via a programmable divider (20₁; 20_{N}), which contains a spread factor (M).

7. Signal generator according to claim 6,
**characterised in that**,
on falling below a threshold level, each buffer memory (13₁, 13_{N}) transmits a reload request (interrupt) to the digital signal processor (10).

8. Signal generator according to claim 6 or 7,
**characterised in that**
several channels are provided, that a common image memory (14) is used for several channels and that, between each buffer memory (13₁) and the common image memory (14), a first address register (30) is provided, which allows a switching of the address supplied to the common image memory (14) in dependence upon the current channel.

9. Signal generator according to any one of claims 1 to 8,
**characterised in that**
writing to the image memory (14) is possible at the same time as reading from the image memory (14).

10. Signal generator according to claim 9,
**characterised in that**
the address of a memory region of the image memory (14), which is currently to be written to, is stored in a second address register (31) and incremented or decremented after each write cycle.

11. Signal generator according to claim 9 or 10,
**characterised in that**
several channels are provided, and that a channel buffer memory (13₁, 13₂, 13₃, 13₄) is provided for each channel, which buffer memory contains the memory address of the output value (I/Q) to be read from the common image memory (14) for this channel, that at least one write buffer memory (40) is present, which contains the address and the data contents of a region of the image memory (14) to be re-written, and
that a multiplexer (41) is present, which connects the channel buffer memories (13₁, 13₂, 13₃, 13₄) and the write buffer memory (40) alternately to the image memory (14).

## Revendications

1. Générateur de signal (1) pour signal DSSS et/ou CDMA avec au moins une mémoire de séquence d'étalement (15₁, 16₁; 15_{N}, 16_{N}) et au moins un processeur digital de signalisation (10), calculant au préalable une séquence d'étalement (15₁, 16₁, 15_{N}, 16_{N}) au cours d'une phase d'initialisation et l'enregistrant dans la mémoire de séquence d'étalement, **caractérisé en ce que**, au cours d'une phase d'utilisation, le processeur digital de signalisation (10) transmet des symboles de données à au moins une mémoire de projection (14₁; 14_{N}); chaque mémoire de projection (14₁; 14_{N}) contient un tableau de projection, grâce auquel les bits actuels (DI, DQ) des symboles de données et au moins un bit actuel de la séquence d'étalement, extraits de manière séquentielle dans chaque mémoire de séquence d'étalement (15₁, 16₁; 15_{N},16_{N}), sont projetés en une valeur par défaut (OI₁, OQ₁; OI_{N}, OQ_{N}).

2. Générateur de signal selon la revendication 1, **caractérisé en ce que** plusieurs canaux sont présents et une mémoire de projection (14₁; 14_{N}) est prévue pour chaque canal, de sorte qu'une valeur par défaut I (Phase In) (OI₁, OI_{N}) et une valeur par défaut Q (Phase Quadrature) (OI_{N}, OQ_{N}) sont à chaque fois générées et additionnées dans un additionneur (17, 18).

3. Générateur de signal selon la revendication 2, **caractérisé en ce qu'**il contient, pour chaque canal, une mémoire de séquence d'étalement I (15₁, 15_{N}), comprenant une séquence d'étalement I, et une mémoire de séquence d'étalement Q (16₁, 16_{N}), comprenant une séquence d'étalement Q.

4. Générateur de signal selon la revendication 2 ou 3, **caractérisé en ce que** les valeurs par défaut (OI₁, OQ₁; OI_{N}, OQ_{N}) dépendent d'un degré d'amplification (Gainl; GainN) spécifique à chaque canal et contenu dans la mémoire de projection (14₁; 14_{N}).

5. Générateur de signal selon une des revendications 1 à 4, **caractérisé en ce que** le processeur digital de signalisation (10) transmet à la mémoire de projection (14₁; 14_{N}) non seulement des bits de symboles de données(DI, DQ), mais aussi des attaques (bits d'activation) (EI, EQ).

6. Générateur de signal selon une des revendications 1 à 5, **caractérisé en ce que**, entre le processeur digital de signalisation (10) et chaque mémoire de projection (14₁; 14_{N}), se trouve une mémoire-tampon (13₁; 13_{N}) et **en ce qu'**un générateur de fréquence de puce (19) est prévu, dont la fréquence de puce est reliée directement à la mémoire de séquence d'étalement (15₁, 16₁; 15_{N}, 16_{N}) et à la mémoire de projection (14₁; 14_{N}), ainsi qu'à la mémoire-tampon (13₁; 13_{N}), via un diviseur programmable (20₁; 20_{N}), contenant un facteur d'étalement (M).

7. Générateur de signal selon la revendication 6, **caractérisé en ce que** chaque mémoire-tampon (13₁; 13_{N}) transmet une demande de recharge (renvoi) au processeur digital de signalisation (10), lorsqu'il passe au-dessous d'un niveau déterminé.

8. Générateur de signal selon la revendication 6 ou 7, **caractérisé en ce que** plusieurs canaux sont présents, une mémoire de projection (14) commune étant utilisée pour plusieurs canaux et un premier registre d'adresse (30) étant prévu entre chaque mémoire-tampon (13₁) et la mémoire de projection (14) commune; ce registre d'adresse rend possible une commutation des adresses transférées à la mémoire de projection (14) commune, tout en maintenant une relation de dépendance avec le canal actuel.

9. Générateur de signal selon une des revendications 1 à 8, **caractérisé en ce qu'**il est possible d'écrire sur la mémoire de projection 14 et de lire celle-ci simultanément.

10. Générateur de signal selon la revendication 9, **caractérisé en ce que** l'adresse d'une zone mémoire de la mémoire de projection (14) sur laquelle on doit écrire est enregistrée dans un second registre d'adresse (31) et est incrémentée ou décrémentée après chaque cycle d'écriture.

11. Générateur de signal selon la revendication 9 ou 10, **caractérisé en ce que** plusieurs canaux sont prévus et, pour chaque canal, une mémoire-tampon de canal (13₁, 13₂, 13₃, 13₄) est présente et contient l'adresse mémoire de la valeur par défaut (I/Q) pour ce canal, extraite dans la mémoire de projection (14); **caractérisé en ce que** au moins une mémoire-tampon d'écriture (40) est présente, contenant l'adresse et le contenu des données d'une nouvelle zone de la mémoire de projection (14) à inscrire; et **caractérisé en ce qu'**un multiplexeur (41) est présent, reliant en alternance la mémoire-tampon de canal (13₁, 13₂, 13₃, 13₄) et la mémoire-tampon d'écriture (40) avec la mémoire de projection (14).
